# EUROPEAN PATENT APPLICATION

(11) **EP 4 521 825 A1**
(43) Date of publication of application: **12.03.2025**
(21) Application number: 24196504.5
(22) Date of filing: 26.08.2024
(51) Int. Cl.: H04W 48/12, H04W 48/14, H04W 84/12, H04W 12/08, H04W 12/12

(54) **REDUCED NEIGHBOR REPORT ENHANCEMENTS**

(30) Priority: 08.09.2023 US 202363581493 P
(71) Applicant: Apple Inc., Cupertino, CA 95014 (US)
(72) Inventor: KNECKT, Jarkko L., Cupertino, CA, 95014 (US); LIU, Yong, Cupertino, CA, 95014 (US); VERMA, Lochan, Cupertino, CA, 95014 (US); THAKUR, Sidharth R., Cupertino, CA, 95014 (US); WU, Tianyu, Cupertino, CA, 95014 (US); JIANG, Jinjing, Cupertino, CA, 95014 (US); WANG, Qi, Cupertino, CA, 95014 (US); HEDAYAT, Ahmad Reza, Cupertino, CA, 95014 (US); YONG, Su Khiong, Cupertino, CA, 95014 (US)
(74) Representative: Lang, Johannes

(57) **Abstract**

A station may use information from a reduced neighbor report to determine which neighboring access points (APs) to scan. A station may receive the reduced neighbor report from an AP. The reduced neighbor report may include one or more parameters related to security, verification status, or capabilities of neighbor APs. The station may scan channels of the one or more of the neighbor APs based on the security, the verification status, or the capabilities of the neighbor Aps.

## Description

### TECHNICAL FIELD

This application relates generally to wireless communication systems, including generating a reduced neighbor report to improve efficiency in wireless networks.

### BACKGROUND

Wireless communication technology uses various standards and protocols to transmit data between an access point and a wireless communication device. Wireless communication system standards and protocols can include, for example, 3rd Generation Partnership Project (3GPP) Long Term Evolution (LTE) (e.g., 4G), 3GPP New Radio (NR) (e.g., 5G), and Institute of Electrical and Electronics Engineers (IEEE) 802.11 standard for Wireless Local Area Networks (WLAN) (commonly known to industry groups as Wi-Fi^{®}).

In the 802.11 standard for WLAN, an access point (AP) is a device that creates a wireless local area network (WLAN), or Wi-Fi^{®} network. It may be connected to a wired network, such as an Ethernet network, and provides wireless access to that network for other devices. A station is a device that is capable of being wirelessly connected to the AP to join the WLAN network. Stations can be laptops, smartphones, tablets, or any other device with a WLAN adapter.

APs and stations communicate with each other using the Wi-Fi^{®} protocol. Various protocols have been established to increase security over a wireless communication network. For example, Simultaneous Authentication of Equals is the core authentication protocol of WP A3-Personal, and is mandated to be supported by all Wi-Fi^{®} Alliance certified devices, including both access points (APs) and non-AP stations (STAs).

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates a Wi-Fi^{®} channel distribution chart in accordance with some embodiments.
FIG. 2 illustrates a passive scanning timeline and an active scanning timeline in accordance with some embodiments.
FIG. 3 illustrates a roaming flow diagram for APs with different security modes.
FIG. 4 illustrates an example of reported BSSs in a reduced neighbor report in accordance with some embodiments.
FIG. 5 illustrates security information bits that may be included in the reduced neighbor report in accordance with some embodiments.
FIG. 6 illustrates example values for security mode information on a reduced neighbor report in accordance with some embodiments.
FIG. 7 illustrates a verification variable that may be included in the reduced neighbor report in accordance with some embodiments.
FIG. 8 illustrates network controller verification and AP authentication in accordance with some embodiments.
FIG. 9 illustrates several fields that may be included in the reduced neighbor report that may indicate one or more capabilities of an AP.
FIG. 10A illustrates fields of a reduced neighbor report element in accordance with some embodiments.
FIG. 10B illustrates fields of a reduced neighbor report element in accordance with some embodiments.
FIG. 10C illustrates fields of a reduced neighbor report element in accordance with some embodiments.
FIG. 11 illustrates a method for operation of a station in a wireless local area network in accordance with some embodiments.
FIG. 12 illustrates a method for operation of an AP in a wireless local area network in accordance with some embodiments.
FIG. 13 illustrates a system for performing signaling between a wireless device and a network device, according to embodiments disclosed herein.

### DETAILED DESCRIPTION

Wireless communication systems (e.g., Wi-Fi^{®} networks) rely on reduced neighbor reports to enhance network performance, interference management, and seamless handover between Access Points (APs). The reduced neighbor report may be relied on by stations (STAs) in out-of-band scanning for neighboring APs. This description outlines a method for generating a Wi-Fi reduced neighbor report, which efficiently manages and transmits neighbor AP information to optimize network resources and improve overall system performance.

The Wi-Fi^{®} reduced neighbor report may include select information concerning the neighbor APs to assist the STA when performing out-of-band scanning. In some embodiments, the reduced neighbor report may provide neighbor AP information that may reduce the scanning of the STA by providing scanning guidance. This may enhance Wi-Fi network efficiency and facilitates seamless handover between APs.

The STAs may use the reduced neighbor reports to monitor neighboring access points to evaluate their relevance as potential handover targets. In this process, the STA may consider various factors, such as signal strength, quality, congestion levels, and available capacity. By analyzing these parameters, the STA may determine the suitability of neighboring access points.

When generating the reduced neighbor report, the AP may include information about neighboring APs that may provide guidance for the STAs out-of-band scanning. For example, the reduced neighbor report may include network identification, signal characteristics, and channel utilization. However, in some Wi-Fi^{®} networks, the reduced neighbor reports could be improved by including additional information.

The reduced neighbor report could provide better guidance for the next scanned channel selection. For example, the STA may need to scan all basic service sets (BSSs) to discover the highest security mode BSS. In some embodiments herein, a reduced neighbor report may be used to help select scanned channels based on AP security mode. Further, the reduced neighbor report may advertise fake/attacker AP information. The STA does not know whether AP has verified AP information. Accordingly, in some embodiments, the reduced neighbor report may include information indicating whether the information was verified. The reduced neighbor report is targeted to speed up scanning to associate with an AP. In some embodiments, the reduced neighbor report may be enhanced to help an STA also to discover APs for location measurement.

By implementing an enhanced reduced neighbor report, as described herein, wireless communication systems may experience enhanced performance and increased system stability. Methods herein may optimize the use of network resources by transmitting neighbor cell information to facilitate efficient handover and deliver a seamless and uninterrupted user experience within Wi-Fi^{®} networks. The Wi-Fi^{®} reduced neighbor report method provides an efficient solution to managing neighbor cell information in Wi-Fi^{®} networks. Reduced neighbor report enhancements described herein may include broadcast information for scanning STAs that may reduce scanning time and reduce the number of scanned channels.

Various embodiments are described with regard to a station (STA) and Access Point (AP). However, reference to a STA and AP is merely provided for illustrative purposes. The example embodiments may be utilized with any electronic component that may establish a connection to a network and is configured with the hardware, software, and/or firmware to exchange information and data with the network. Therefore, the STAs and APs as described herein are used to represent any appropriate electronic component.

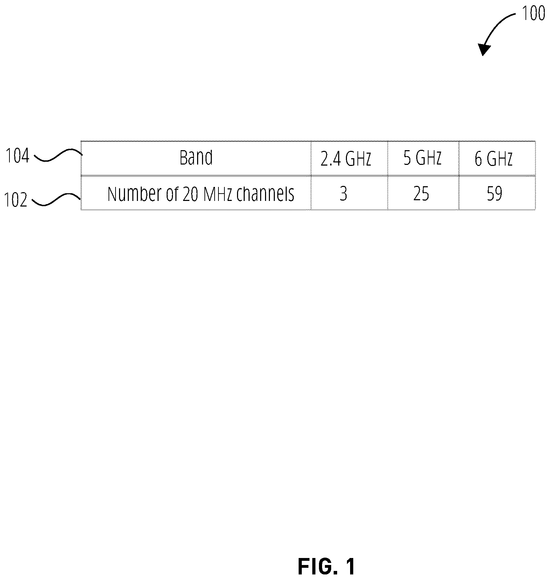

FIG. 1 illustrates a Wi-Fi^{®} channel distribution chart 100 in accordance with some embodiments. As shown, each band 104 includes a number of channels 102. As shown, the 2.4GHz band may include three channels, the 5GHz band may include 25 channels, and the 6GHz band may include 59 channels.

To determine a new AP to transition to, a STA may scan channels to determine where APs are located and the quality of the signal from the AP. The total scanning time depends on the number of channels the STA scans. For example, the total scanning time may be equal to the number of scanned channels multiplied by the time to scan a channel. One goal of wireless communication systems is to reduce the time spent scanning. The enhanced reduced neighbor report described herein may be a way to reduce the number of scanned channels, which reduces the scanning time.

For out-of-band scanning, a station (STA) may start scanning on the 2.4 gigahertz (GHz) band for APs. An AP may assist in the out-of-band scanning by generating reduced neighbor reports. The AP may identify the neighboring APs. This can be done by scanning the environment for Wi-Fi signals. The AP may collect the essential information about the neighboring AP, such as the Basic Service Set Identifier (BSSID), SSID, channel, and signal strength. The AP may encode the information into a reduced neighbor report. The AP may broadcast the reduced neighbor report to the STA. This can be done by sending the report in a beacon frame or a probe response frame.

The STA may receive Beacons and Probe Responses with Reduced Neighbor Reports. Reduced neighbor reports may help the STA to scan (5 GHz and 6 GHz) channels that have APs of desired service set identifier (SSID). For example, the reduced neighbor reports may provide a pointer to indicate on which channels the neighboring APs are operating. The pointers from the reduced neighbor reports may be used to reduce the amount of scanning the STA needs to perform.

For example, the STA may receive a reduced neighbor report from the AP it is currently associated with. The STA may parse the reduced neighbor report to get the BSSID, SSID, channel, and signal strength of the neighboring APs. The STA may compare the information in the reduced neighbor report to its own preferences, such as the SSID, channel, and signal strength. The STA may select the AP that best meets its preferences. The STA may send a request to the selected AP. The selected AP may respond with a full neighbor report or a multi-link element, which contains more detailed information about the AP. The STA uses the information in the full neighbor report to decide whether to roam to the selected AP.

However, the reduced neighbor report could provide better guidance for the next scanned channel selection. For instance, the reduced neighbor report may include additional information that the STA may use to compare against its own preferences to determine candidate APs to scan. Currently, there may be many candidate APs in the reduced neighbor report. The large number of candidate APs makes it more complicated for the STA to determine whether an AP is relevant for the STA. Accordingly, in some embodiments, the AP may include additional information to better describe the APs in the reduced neighbor report. The STAs may use the additional information to reduce the number of candidate APs to be scanned.

For example, security may be a preference that the STA may use to determine suitability of an AP. However, currently to obtain this information, the STA may need to scan all BSSs in the reduced neighbor report to discover the highest security mode BSS. The additional information in the reduced neighbor report could help to select scanned channels based on AP security mode.

Further, a reduced neighbor report may advertise fake or attacker AP information. The STA currently does not have a mechanism to determine whether AP has verified AP information. In some embodiments, enhancements to the reduced neighbor report may provide an indication of whether the AP information is verified.

Further, the reduced neighbor report is targeted to speed up scanning to associate with an AP. However, the reduced neighbor report may also help to discover APs for location measurement. In some embodiments herein, enhancements to the reduced neighbor report may provide an indication of APs for location measurement.

With these additional enhancements, the number of APs that the STA scans may be reduced. Reducing the number of APs scanned can reduce the total scanning time. Such a reduction in scanning time would improve STA efficiency.

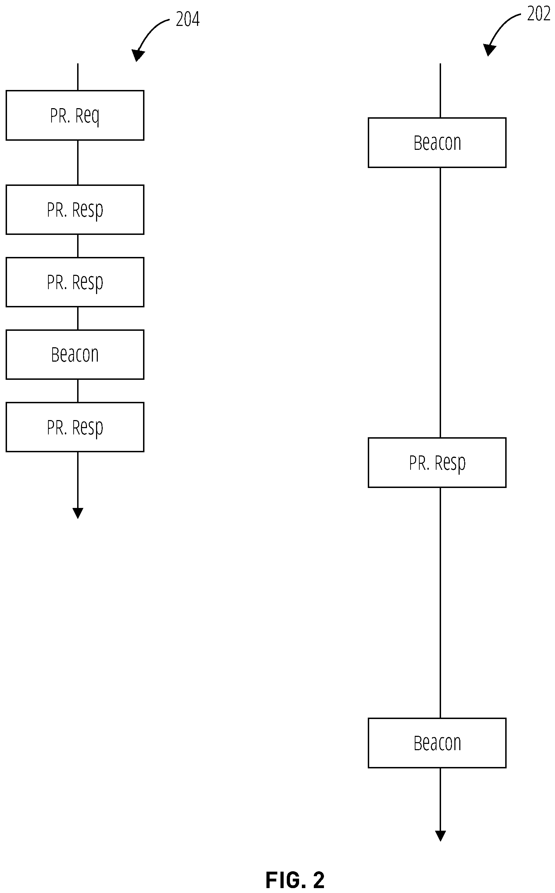

FIG. 2 illustrates a passive scanning timeline 202 and an active scanning timeline 204 in accordance with some embodiments. As shown on the passive scanning timeline 202, passive scanning of a channel may include monitoring for a beacon transmission or a probe response transmission. For instance, in some embodiments, an STA may monitor each 2.4 GHz or 5 GHz channel for 120 milliseconds (ms) this may give ample time to receive a beacon from an AP on the channel. For 6GHz channels, the STA may monitor for a probe response for a period of 30ms per 6GHz channel to discover an AP on the channel.

As shown on the active scanning timeline 204, the STA may scan each channel for a shorter period of time. For example, the STA may scan for 20 ms per channel. The STA may send a probe request and then find APs that respond to the probe request through a probe response or beacon. The 6 GHz may have active scanning limitations. The reduced neighbor report may help reduce the number of channels scanned by the STA.

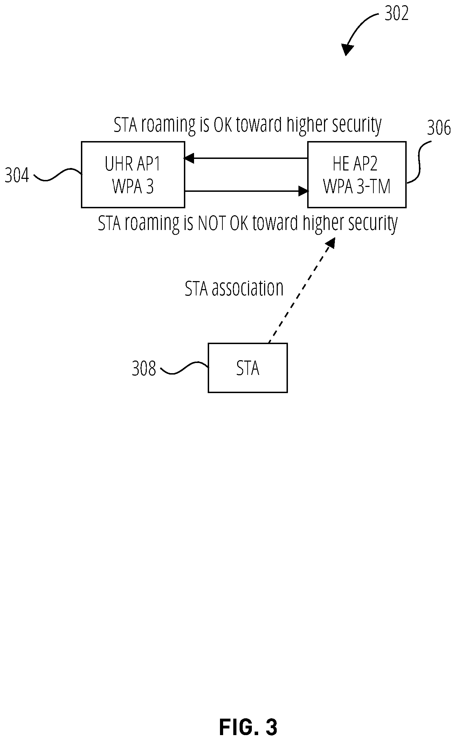

FIG. 3 illustrates a roaming flow diagram 302 for APs with different security modes. In the illustrated embodiment, a first AP 304 may be an Ultra High Reliability (UHR) AP that supports Wi-Fi Protected Access (WPA) 3. WPA 3 is a security protocol designed to enhance the security of wireless networks. It is an improvement over its predecessor, WPA 2, and provides stronger encryption, authentication, and key management mechanisms.

A second AP 306 may support WPA 3-transition mode (TM). WPA 3 TM refers to a feature introduced in the WPA 3 security protocol. It is designed to provide backward compatibility for devices that do not support the full set of security enhancements offered by WPA 3. When a network is configured in WPA 3 TM, it operates as a dual-mode network that is capable of supporting both WPA 3 and WPA 2 simultaneously. This allows devices using older Wi-Fi standards or ones that lack WPA 3 capabilities to still connect to the network using the WPA 2 security protocol. WPA 3 TM enables network administrators to balance security and compatibility by offering the option to support both WPA 2 and WPA 3 simultaneously. This ensures that devices that support either security protocol can successfully connect to the network. While providing backward compatibility, WPA 3 TM also focuses on leveraging the enhanced security mechanisms of WPA 3 for devices capable of utilizing it. This ensures that devices benefiting from WPA 3's improved encryption, authentication, and key management are not available to WPA 3 devices.

However, there may be vulnerabilities for WPA 3 devices when the second AP 306 communicates with both WPA 3 devices and WPA 2 devices. For example, if both WPA 2 devices and WPA 3 devices use the same passphrase for the second AP 306, an attacker may be able to use a brute force attack to crack the passphrase through the WPA 2 devices. If the passphrase is the same for the WPA 3 devices then the brute force attack would result in exposure of those devices as well.

As shown, an STA 308 may first associate with the second AP 306. In the illustrated embodiment, the STA 308 is a WPA 3 device. Accordingly, the STA 308 is capable of roaming to the first AP 304 with the higher security. Some WPA 3 STAs may be configured to be able roam toward a higher security level AP but not be able to roam towards a lower security level AP. For example, a STA may not be allowed to roam from a WPA 3 network to a WPA 3 TM network.

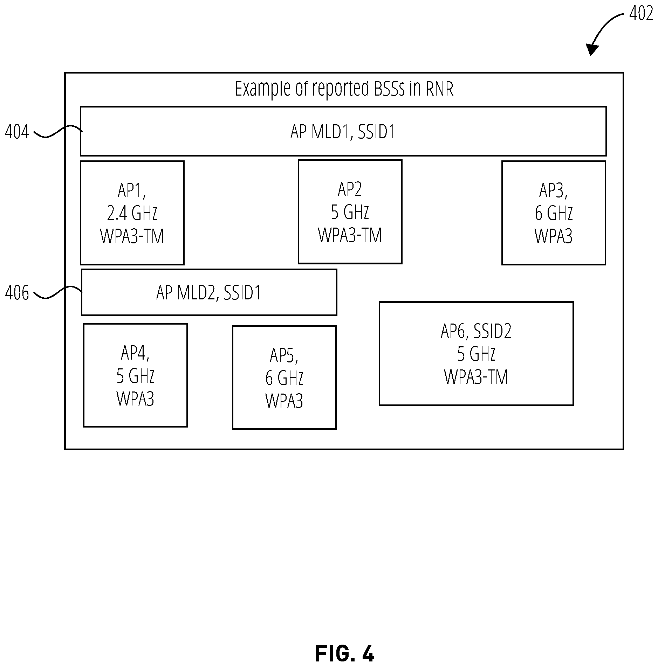

Wi-Fi 7 introduced multi-link device (MLD) support. FIG. 4 illustrates an example of reported BSSs 402 in a reduced neighbor report in accordance with some embodiments. A network may contain WPA 3 and WPA 3 TM APs. In some embodiments, only WPA3 security mode may be allowed in the 6 GHz band. The 2.4 and 5 GHz bands may support WPA3 or WPA-3TM security modes. Wi-Fi 7 affiliated APs may have different security modes.

As shown, AP MLD1 404 may include AP1 on the 2.4 GHz band, AP2 on the 5 GHz band, and AP3 on the 6 GHz band. As shown, AP1 may use WPA 3 TM, AP2 may also use WPA 3 TM, and AP3 may use WPA 3. A second AP MLD, AP MLD2 406, may include AP4 on the 5 GHz band and AP5 on the 6 GHz band. AP4 may use WPA 3 and AP5 may use WPA 3. AP6 may have a different SSID (SSID2) and may operate on the 5 GHz band using WPA 3 TM.

In some wireless networks, the reduced neighbor report has no information on BSS security level. For example, the reduced neighbor report may not indicate the different security levels for AP1, AP2, AP3, AP4, AP5, and AP6 in the illustrated embodiment. In such a network, an STA can detect AP security mode only by receiving the body of the Beacon and Probe Response frame. This requires link specific scanning and may add scanning delays and unnecessary scanning of BSSs with lower security mode even if the end user of the STA, or the policy followed by the STA, does not allow the STA to roam to the lower security level AP.

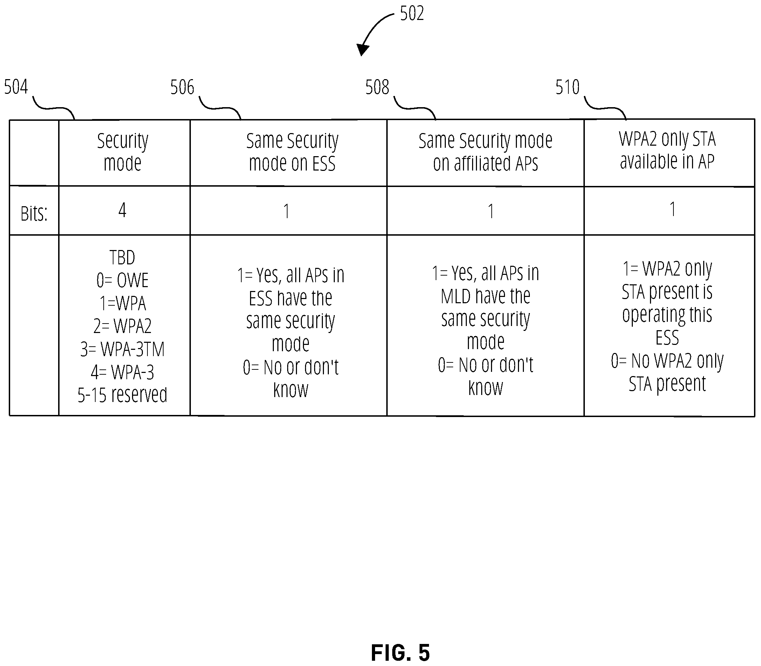

Accordingly, in some embodiments, the reduced neighbor report may include security mode information. For example, the reduced neighbor report may include the security mode of a reported AP. FIG. 5 illustrates security information bits 502 that may be included in the reduced neighbor report in accordance with some embodiments. A wireless communication system may use one or more of the variables shown in FIG. 5. The variables may include a first field 504 to indicate the security mode, a second field 506 to indicate whether a same security mode is used on the Extended Service Set (ESS), a third field 508 to indicate whether a same security mode is used on affiliated APs of an MLD, and a fourth field 510 to indicate whether WPA2 only STA is available in network.

An AP may obtain the neighbor APs and the networks security mode and include that information in the reduced neighbor report. An STA may receive this information and use it to determine which APs to scan. For example, the STA can select to scan a channel with APs operating on security modes that the STA may use. For instance, if the STA desires to operate on an AP using WPA 3, it may skip scanning channels with APs using WPA 3 TM and scan channels with APs using WPA 3. This may reduce scan delays and STA power consumption.

As shown, the first field 504 may indicate the security mode of an AP. For instance, in the illustrated embodiment, the first field 504 may be four bits. Other embodiments may have more or fewer bits. As shown, the bits may be used to indicate the security mode. In some embodiments, a value of zero may indicate that the AP is using Opportunistic Wireless Encryption (OWE) mode, a value of one may indicate that the AP is using WPA, a value of two may indicate that the AP is using WPA 2, a value of three may indicate that the AP is using WPA 3 TM, and a value of four may indicate that the AP is using WPA 3. In the illustrated embodiment, values 5-15 are reserved. In some embodiments, WPA modes may be defined as a set of supported Authentication and Key Managements (AKMs). In the illustrated embodiment, the WPA modes are listed. However, in some embodiments, the highest and lowest AKM could be signaled too.

The second field 506 may indicate whether a same security mode is used on the ESS. In the illustrated embodiment, the second field 506 may be set to one to indicate that all APs in the ESS have the same security mode. The second field 506 may be set to zero to indicate that all the APs do not have the same security mode or that it is unknown.

The third field 508 may indicate whether a same security mode is used on affiliated APs of an MLD. In the illustrated embodiment, the third field 508 may be set to one to indicate that all APs in the MLD have the same security mode. The third field 508 may be set to zero to indicate that all the APs do not have the same security mode or that it is unknown.

The fourth field 510 may indicate whether a WPA2 only STA is in the network. The WPA2 STAs may be a security risk for WPA3-TM networks because sometimes WPA3-TM has the same passphrase to WPA2 and WPA3 and WPA2 passphrase is easy to crack. Accordingly, a STA that wants higher security may avoid a network that includes WPA2 in the WPA3-TM network. In the illustrated embodiment, the fourth field 510 may be set to one to indicate that a WPA2 only STA is operating on the ESS. The fourth field 510 may be set to zero to indicate that no WPA 2 only STAs are present on the ESS.

Thus, an AP may provide a STA with security information on out-of-band signaling using the reduced neighbor report. The STA may use the security information from one or more of the variables in the reduced neighbor report to select a channel with an AP to scan. For example, the STA may be interested in only APs without WPA2 STAs. The STA may then scan the channels associated with APs where the fourth field 510 is set to zero.

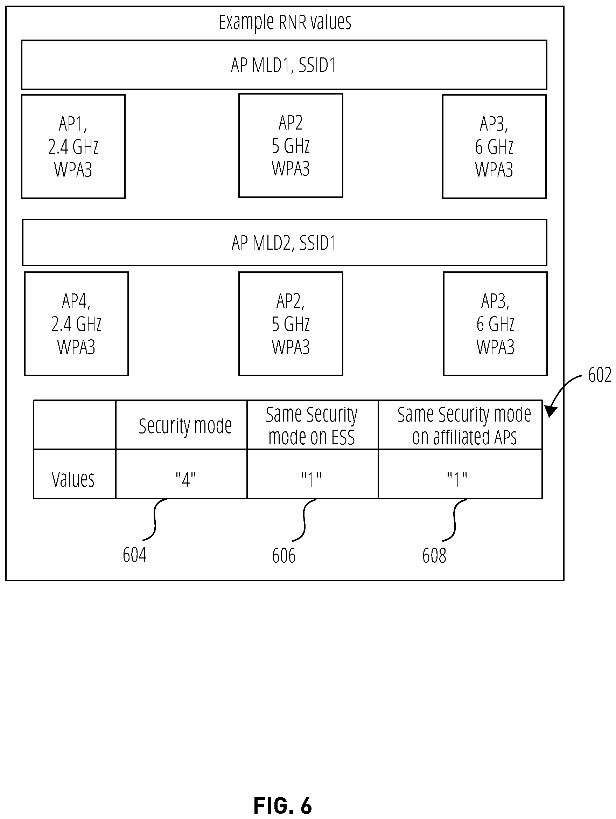

FIG. 6 illustrates example values 602 for security mode information on a reduced neighbor report in accordance with some embodiments. As shown, the security mode for each of the APs may be set to WPA 3. The illustrated values 602 may be for AP1. Accordingly, the security mode variable 604 may be set to four to indicate that the AP uses WPA 3. Further, in the illustrated embodiment, the same security mode on ESS variable 606 is set to one to indicate that each of the APs on the ESS with AP1 are using the same security mode (e.g., WPA 3). Similarly, same security mode on affiliated APs variable 608 is set to one to indicate that each of the APs on the same MLD (e.g., MLD1 for AP1) are using the same security mode. Values for each of the APs may be included in a reduced neighbor report.

Further, currently the reduced neighbor report information has no verification requirements. Accordingly, the STA may not know if the reduced neighbor report information valid. Reported Co-located BSS information should be correct, because the same physical AP operates the BSSs. The reduced neighbor report information of neighbor BSS information may be obtained by Beacon Measurement (based on received beacons), as in Wi-Fi 7 test case. In some embodiments, the reduced neighbor report may provide a verification of the information to the STA.

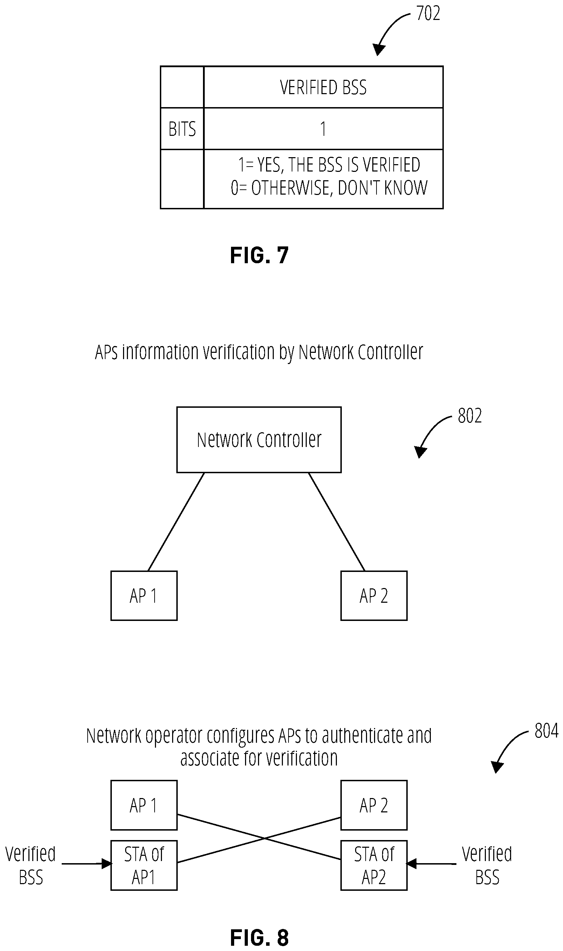

FIG. 7 illustrates a verification variable 702 that may be included in the reduced neighbor report in accordance with some embodiments. The verification variable 702 may indicate whether the AP that generated the reduced neighbor report has verified the information. In some embodiments, the verification variable 702 may be one bit. The verification variable 702 may be set to one to indicate that the information for a BSS is verified, or may be set to zero if not verified.

The reduced neighbor report may use the verification variable 702 to signal whether reported BSS information is verified. This may indicate whether the STA can trust the information. For instance, an STA may not do active scanning on a 6 GHz channel, if the reported 6 GHz band AP information is not verified. In some embodiments, the STA may prioritize scanning verified APs over non-verified APs.

FIG. 8 illustrates network controller verification 802 and AP authentication 804 in accordance with some embodiments. In some cases, network controller verification 802 may be used to determine whether the BSS information can be considered verified. For instance, if the AP generating the reduced neighbor report is associated with the same network controller as the neighbor AP, the neighbor AP may be verified by the network controller. An AP may indicate this network controller verification to an STA using the reduced neighbor report (e.g., verification variable 702).

In some embodiments, the network operator may configure the APs to authenticate and associate for verification (e.g., AP authentication 804). In this way, AP1 may verify AP's information for the STA currently on AP1 but moving to AP2 and vice versa. The AP1 may indicate the verification to an STA using the reduced neighbor report (e.g., verification variable 702).

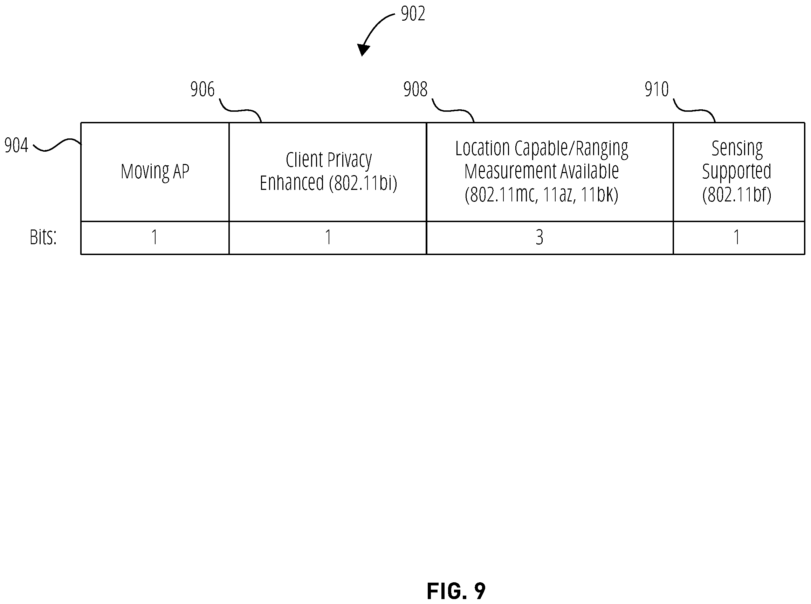

In some embodiments, other BSS capabilities may be signaled in the reduced neighbor report. For example, FIG. 9 illustrates several fields 902 that may be included in the reduced neighbor report that may indicate one or more capabilities of an AP. Some embodiments may include all of these variables in the reduced neighbor report. Other embodiments may include a subset of these variables in the reduced neighbor report.

Static APs are suitable for STA location measurements. For STA location measurements, the STA may determine a location by measuring a Received Signal Strength Indicator (RSSI) of the received Beacons. However, currently the reduced neighbor report does not signal whether an AP is a static AP or a moving AP. This information would be beneficial when selecting the AP for location measurements. The fields 902 may include a moving AP field 904. In some embodiments, the moving AP field 904 may be one bit. The moving AP field 904 may signal whether the reported AP is suitable for location measurements. In other words, the moving AP field 904 can indicate whether the AP is static and mains powered, or if the AP is a moving AP and battery powered (e.g., phone operating as an AP). Typically, an AP moves slowly. If the moving AP field 904 is not available, the STA may detect a moving AP in long term measurements.

In some embodiments, the fields 902 may include a client privacy support field 906. In some embodiments, the client privacy support field 906 may be one bit. The client privacy support field 906 may signal whether an AP supports STA privacy enhancements. Privacy support may be independent of data encryption modes. In some embodiments, the privacy support field 906 may be more than one bit to indicate different privacy levels.

In some embodiments, the fields 902 may include a location capable/ranging measurement field 908. The location capable/ranging measurement field 908 may be three bits. The reduced neighbor report may use the location capable/ranging measurement field 908 to signal whether an AP is available for location/ranging measurements. The STA can use this indication to find a candidate AP for these operations quickly.

In some embodiments, the fields 902 may include a sensing support field 910. The sensing support field 906 may be one bit that signals. The reduced neighbor report may use the sensing support field 910 to signal whether an AP is available for sensing purposes under 802.1 1bf. The STA can use this indication to find a candidate AP for these operations quickly.

Currently a reduced neighbor report does not contain relevant parameters to help STA to select the next scanned channel. As described herein, a number of parameters may be introduced into the reduced neighbor report to enhance the report.

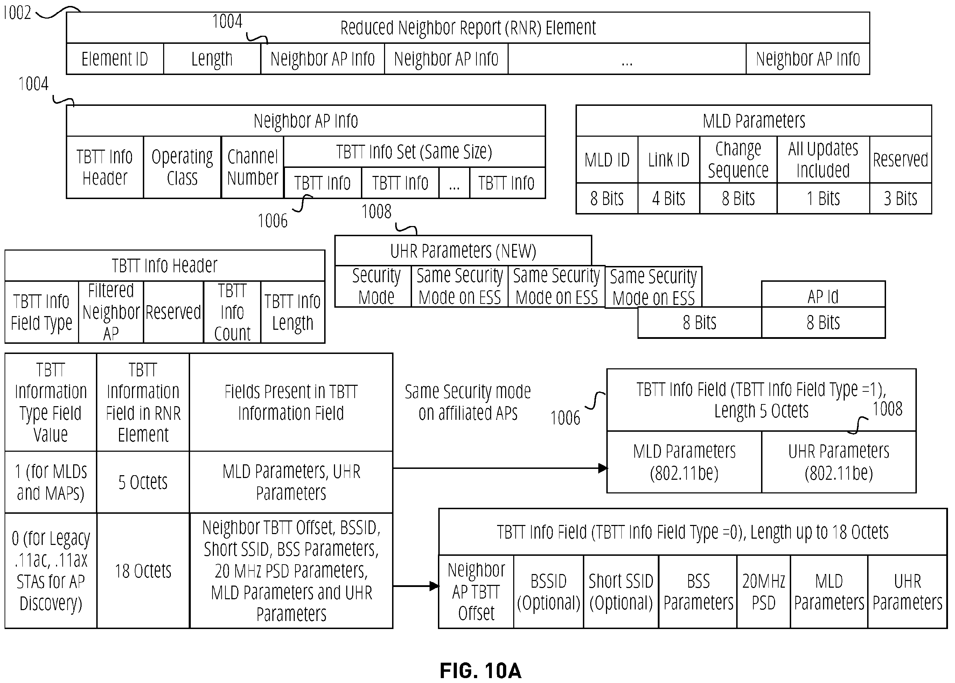

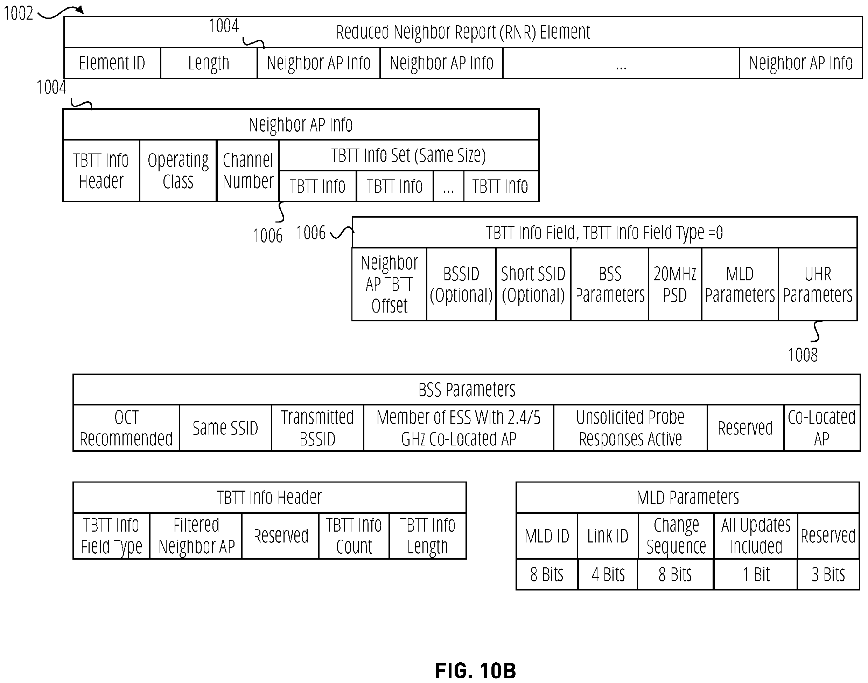

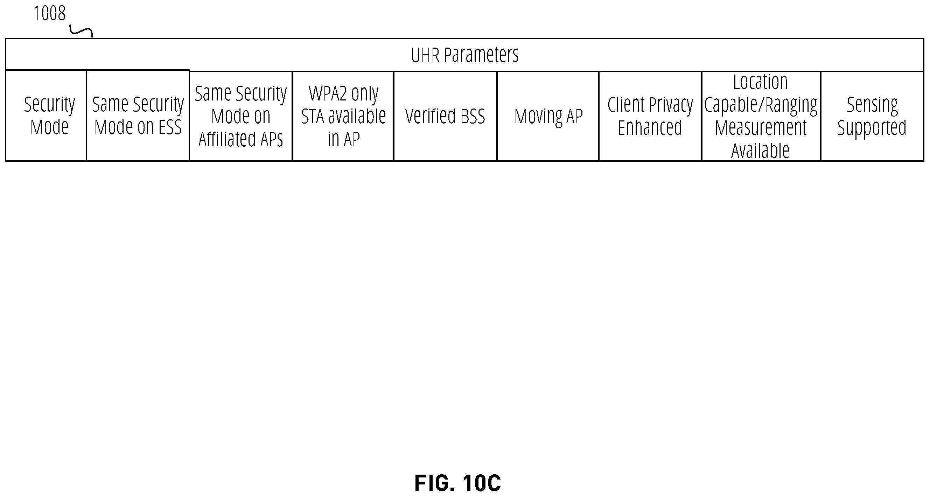

For example, FIG. 10A, FIG. 10B, and FIG. 10C illustrate fields of a reduced neighbor report element 1002 in accordance with some embodiments. As shown, the reduced neighbor report element 1002 may include one or more Neighbor AP information fields 1004. The neighbor AP information fields 1004 may include information about the neighboring APs. The neighbor AP information fields 1004 may include one or more Target Beacon Transmission Time (TBTT) information fields 1006. The TBTT information fields 1006 may include ultra-high reliability (UHR) parameters 1008. The UHR parameters 1008 may include fields as described with reference to FIG. 5, FIG. 7, and FIG. 9. While the illustrated embodiment includes nine fields in the UHR parameters 1008, other embodiments may include a subset of these fields.

The security mode information may help an STA to scan first the APs to which it can associate based on security preferences. A verified BSS field may signal whether BSS information is verified. The moving AP field may signal whether an AP is suitable on Beacon reception based location measurements. Accordingly, out-of-band (OOB) discovery (e.g., reduced neighbor report) may remain a scanning tool for initial AP discovery. The reduced neighbor report may be transmitted for legacy STAs as well.

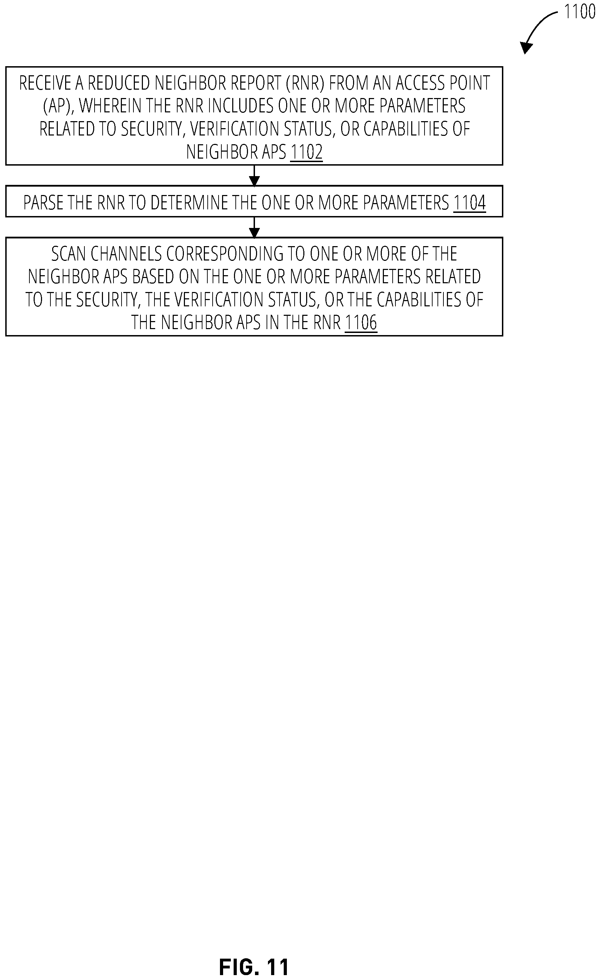

FIG. 11 illustrates a method 1100 for operation of a station in a wireless local area network in accordance with some embodiments. The illustrated method 1100 includes receiving 1102 a reduced neighbor report (RNR) from an AP. The RNR may include one or more parameters related to security, verification status, or capabilities of neighbor APs. The method 1100 further includes parsing 1104 the RNR to determine the one or more parameters. The method 1100 further includes scanning 1106 channels corresponding to one or more of the neighbor APs based on the one or more parameters related to the security, the verification status, or the capabilities of the neighbor APs in the RNR.

In some embodiments, the one or more parameters includes a security mode parameter that indicates a security mode of the neighbor APs.

In some embodiments, the one or more parameters includes a parameter that indicates that a same security mode is used for all APs in an ESS.

In some embodiments, the one or more parameters includes a parameter that indicates that a same security mode is used for all APs in a MLD.

In some embodiments, the one or more parameters includes a parameter that indicates that whether a WPA2 only STA is operating on an ESS.

In some embodiments, the one or more parameters includes a parameter that indicates whether a BSS is verified.

In some embodiments, the one or more parameters includes a parameter that indicates whether the neighbor APs are a moving AP or a static AP.

In some embodiments, the one or more parameters includes a parameter that indicates whether the neighbor APs support STA privacy enhancements.

In some embodiments, the one or more parameters includes a parameter that indicates whether the neighbor APs are available for location or ranging measurements.

In some embodiments, the one or more parameters includes a parameter that indicates whether the neighbor APs support sensing.

In some embodiments, the method 1100 may further include comparing the one or more parameters from the RNR to a set of preferences for the station, and selecting which of the neighbor APs to scan based on the set of preferences.

Embodiments contemplated herein include an apparatus comprising means to perform one or more elements of the method 1100. This apparatus may be, for example, an apparatus of a STA (such as STA 1302 as described herein).

Embodiments contemplated herein include one or more non-transitory computer-readable media comprising instructions to cause an electronic device, upon execution of the instructions by one or more processors of the electronic device, to perform one or more elements of the method 1100. This non-transitory computer-readable media may be, for example, a memory of a STA (such as a memory 1306 of an STA 1302, as described herein).

Embodiments contemplated herein include an apparatus comprising logic, modules, or circuitry to perform one or more elements of the method 1100. This apparatus may be, for example, an apparatus of a STA (such as an STA 1302, as described herein).

Embodiments contemplated herein include an apparatus comprising: one or more processors and one or more computer-readable media comprising instructions that, when executed by the one or more processors, cause the one or more processors to perform one or more elements of the method 1100. This apparatus may be, for example, an apparatus of a STA (such as an STA 1302, as described herein).

Embodiments contemplated herein include a signal as described in or related to one or more elements of the method 1100.

Embodiments contemplated herein include a computer program or computer program product comprising instructions, wherein execution of the program by a processor is to cause the processor to carry out one or more elements of the method 1100. The processor may be a processor of a STA (such as a processor(s) 1304 of an STA 1302, as described herein). These instructions may be, for example, located in the processor and/or on a memory of the STA (such as a memory 1306 of an STA 1302, as described herein).

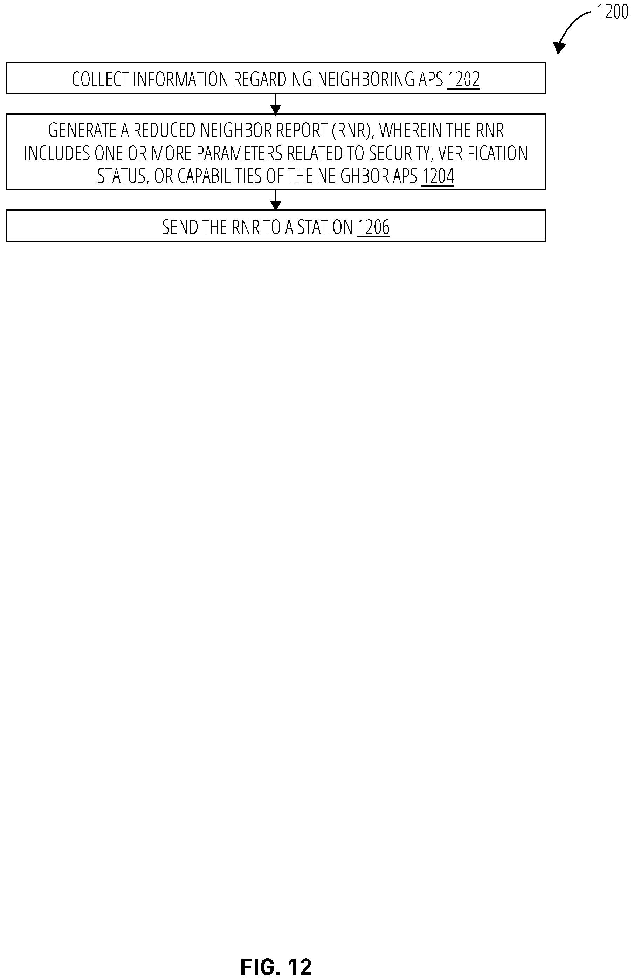

FIG. 12 illustrates a method 1200 for operation of an AP in a wireless local area network in accordance with some embodiments. The illustrated method 1200 includes collecting 1202 information regarding neighboring APs. The method 1200 includes generating 1204 a RNR. The RNR may include one or more parameters related to security, verification status, or capabilities of the neighbor APs. The method 1200 may further include sending 1206 the RNR to a station.

In some embodiments, the one or more parameters includes a security mode parameter that indicates a security mode of the neighbor APs.

In some embodiments, the one or more parameters includes a parameter that indicates that a same security mode is used for all APs in an ESS.

In some embodiments, the one or more parameters includes a parameter that indicates that a same security mode is used for all APs in a MLD.

In some embodiments, the one or more parameters includes a parameter that indicates that whether a WPA2 only STA is operating on an ESS.

In some embodiments, the one or more parameters includes a parameter that indicates whether a BSS is verified.

In some embodiments, the one or more parameters includes a parameter that indicates whether the neighbor APs are a moving AP or a static AP.

In some embodiments, the one or more parameters includes a parameter that indicates whether the neighbor APs support STA privacy enhancements.

In some embodiments, the one or more parameters includes a parameter that indicates whether the neighbor APs are available for location or ranging measurements.

In some embodiments, the one or more parameters includes a parameter that indicates whether the neighbor APs support sensing.

Embodiments contemplated herein include an apparatus comprising means to perform one or more elements of the method 1200. This apparatus may be, for example, an apparatus of an AP (such as an AP 1318, as described herein).

Embodiments contemplated herein include one or more non-transitory computer-readable media comprising instructions to cause an electronic device, upon execution of the instructions by one or more processors of the electronic device, to perform one or more elements of the method 1200. This non-transitory computer-readable media may be, for example, a memory of an AP (such as a memory 1322 of an AP 1318, as described herein).

Embodiments contemplated herein include an apparatus comprising logic, modules, or circuitry to perform one or more elements of the method 1200. This apparatus may be, for example, an apparatus of an AP (such as an AP 1318, as described herein).

Embodiments contemplated herein include an apparatus comprising: one or more processors and one or more computer-readable media comprising instructions that, when executed by the one or more processors, cause the one or more processors to perform one or more elements of the method 1200. This apparatus may be, for example, an apparatus of an AP (such as an AP 1318, as described herein).

Embodiments contemplated herein include a signal as described in or related to one or more elements of the method 1200.

Embodiments contemplated herein include a computer program or computer program product comprising instructions, wherein execution of the program by a processing element is to cause the processing element to carry out one or more elements of the method 1200. The processor may be a processor of an AP (such as a processor(s) 1320 of an AP 1318, as described herein). These instructions may be, for example, located in the processor and/or on a memory of the AP (such as a memory 1322 of an AP 1318, as described herein).

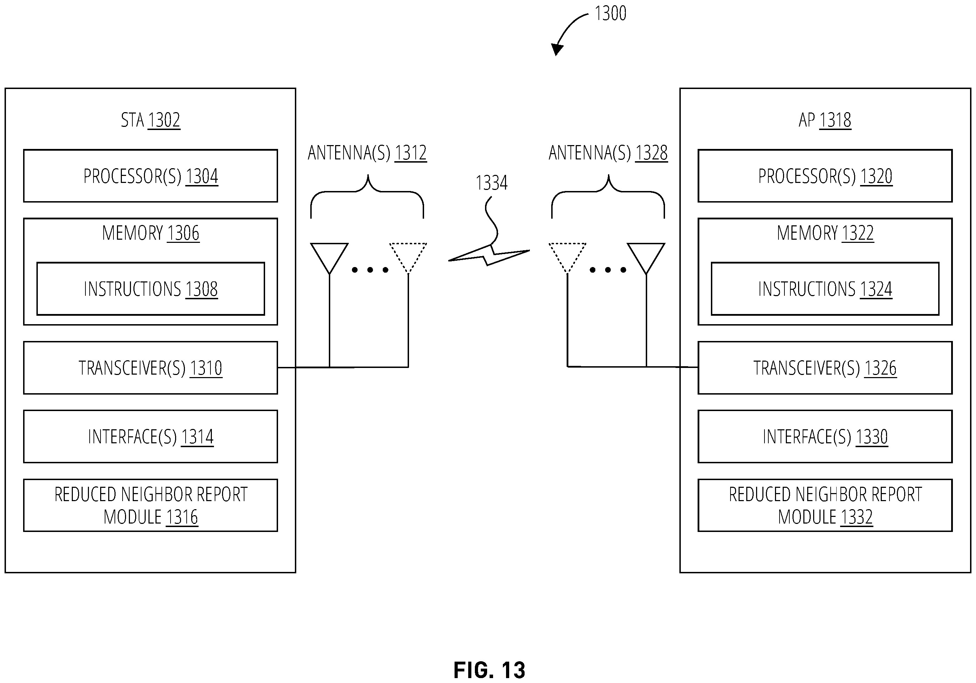

FIG. 13 illustrates a system 1300 for performing signaling 1334 between an STA 1302 and an AP 1318, according to embodiments disclosed herein. The system 1300 may be a portion of a wireless communications system as herein described. The STA 1302 may be, for example, a UE of a wireless communication system. The AP 1318 may be, for example, an access point of a wireless communication system.

The STA 1302 may include one or more processor(s) 1304. The processor(s) 1304 may execute instructions such that various operations of the STA 1302 are performed, as described herein. The processor(s) 1304 may include one or more baseband processors implemented using, for example, a central processing unit (CPU), a digital signal processor (DSP), an application specific integrated circuit (ASIC), a controller, a field programmable gate array (FPGA) device, another hardware device, a firmware device, or any combination thereof configured to perform the operations described herein.

The STA 1302 may include a memory 1306. The memory 1306 may be a non-transitory computer-readable storage medium that stores instructions 1308 (which may include, for example, the instructions being executed by the processor(s) 1304). The instructions 1308 may also be referred to as program code or a computer program. The memory 1306 may also store data used by, and results computed by, the processor(s) 1304.

The STA 1302 may include one or more transceiver(s) 1310 that may include radio frequency (RF) transmitter circuitry and/or receiver circuitry that use the antenna(s) 1312 of the STA 1302 to facilitate signaling (e.g., the signaling 1334) to and/or from the STA 1302 with other devices (e.g., the AP 1318).

The STA 1302 may include one or more antenna(s) 1312 (e.g., one, two, four, or more). For embodiments with multiple antenna(s) 1312, the STA 1302 may leverage the spatial diversity of such multiple antenna(s) 1312 to send and/or receive multiple different data streams on the same time and frequency resources. This behavior may be referred to as, for example, multiple input multiple output (MIMO) behavior (referring to the multiple antennas used at each of a transmitting device and a receiving device that enable this aspect). MIMO transmissions by the STA 1302 may be accomplished according to precoding (or digital beamforming) that is applied at the STA 1302 that multiplexes the data streams across the antenna(s) 1312 according to known or assumed channel characteristics such that each data stream is received with an appropriate signal strength relative to other streams and at a desired location in the spatial domain (e.g., the location of a receiver associated with that data stream). Certain embodiments may use single user MIMO (SU-MIMO) methods (where the data streams are all directed to a single receiver) and/or multi user MIMO (MU-MIMO) methods (where individual data streams may be directed to individual (different) receivers in different locations in the spatial domain).

In certain embodiments having multiple antennas, the STA 1302 may implement analog beamforming techniques, whereby phases of the signals sent by the antenna(s) 1312 are relatively adjusted such that the (joint) transmission of the antenna(s) 1312 can be directed (this is sometimes referred to as beam steering).

The STA 1302 may include one or more interface(s) 1314. The interface(s) 1314 may be used to provide input to or output from the STA 1302. For example, an STA 1302 that is a UE may include interface(s) 1314 such as microphones, speakers, a touchscreen, buttons, and the like in order to allow for input and/or output to the UE by a user of the UE. Other interfaces of such a UE may be made up of transmitters, receivers, and other circuitry (e.g., other than the transceiver(s) 1310/antenna(s) 1312 already described) that allow for communication between the UE and other devices and may operate according to known protocols (e.g., Wi-Fi^{®}, Bluetooth^{®}, and the like).

The STA 1302 may include a reduced neighbor report module 1316. The reduced neighbor report module 1316 may be implemented via hardware, software, or combinations thereof. For example, the reduced neighbor report module 1316 may be implemented as a processor, circuit, and/or instructions 1308 stored in the memory 1306 and executed by the processor(s) 1304. In some examples, the reduced neighbor report module 1316 may be integrated within the processor(s) 1304 and/or the transceiver(s) 1310. For example, the reduced neighbor report module 1316 may be implemented by a combination of software components (e.g., executed by a DSP or a general processor) and hardware components (e.g., logic gates and circuitry) within the processor(s) 1304 or the transceiver(s) 1310.

The reduced neighbor report module 1316 may be used for various aspects of the present disclosure, for example, aspects of FIGS. 1-12. The reduced neighbor report module 1316 is configured to decode the reduced neighbor report from the AP 1318 and determine APs to scan based on parameters in the reduced neighbor report.

The AP 1318 may include one or more processor(s) 1320. The processor(s) 1320 may execute instructions such that various operations of the AP 1318 are performed, as described herein. The processor(s) 1320 may include one or more baseband processors implemented using, for example, a CPU, a DSP, an ASIC, a controller, an FPGA device, another hardware device, a firmware device, or any combination thereof configured to perform the operations described herein.

The AP 1318 may include a memory 1322. The memory 1322 may be a non-transitory computer-readable storage medium that stores instructions 1324 (which may include, for example, the instructions being executed by the processor(s) 1320). The instructions 1324 may also be referred to as program code or a computer program. The memory 1322 may also store data used by, and results computed by, the processor(s) 1320.

The AP 1318 may include one or more transceiver(s) 1326 that may include RF transmitter circuitry and/or receiver circuitry that use the antenna(s) 1328 of the AP 1318 to facilitate signaling (e.g., the signaling 1334) to and/or from the AP 1318 with other devices (e.g., the STA 1302).

The AP 1318 may include one or more antenna(s) 1328 (e.g., one, two, four, or more). In embodiments having multiple antenna(s) 1328, the AP 1318 may perform MIMO, digital beamforming, analog beamforming, beam steering, etc., as has been described.

The AP 1318 may include one or more interface(s) 1330. The interface(s) 1330 may be used to provide input to or output from the AP 1318. For example, an AP 1318 that is a base station may include interface(s) 1330 made up of transmitters, receivers, and other circuitry (e.g., other than the transceiver(s) 1326/antenna(s) 1328 already described) that enables the base station to communicate with other equipment in a core network, and/or that enables the base station to communicate with external networks, computers, databases, and the like for purposes of operations, administration, and maintenance of the base station or other equipment operably connected thereto.

The AP 1318 may include a reduced neighbor report module 1332. The reduced neighbor report module 1332 may be implemented via hardware, software, or combinations thereof. For example, the reduced neighbor report module 1332 may be implemented as a processor, circuit, and/or instructions 1324 stored in the memory 1322 and executed by the processor(s) 1320. In some examples, the reduced neighbor report module 1332 may be integrated within the processor(s) 1320 and/or the transceiver(s) 1326. For example, the reduced neighbor report module 1332 may be implemented by a combination of software components (e.g., executed by a DSP or a general processor) and hardware components (e.g., logic gates and circuitry) within the processor(s) 1320 or the transceiver(s) 1326.

The reduced neighbor report module 1332 may be used for various aspects of the present disclosure, for example, aspects of FIGS. 1-12. The reduced neighbor report module 1332 is configured to generate a reduced neighbor report to send to the STA 1302.

For one or more embodiments, at least one of the components set forth in one or more of the preceding figures may be configured to perform one or more operations, techniques, processes, and/or methods as set forth herein. For example, a processor as described herein in connection with one or more of the preceding figures may be configured to operate in accordance with one or more of the examples set forth herein. For another example, circuitry associated with a STA or AP as described above in connection with one or more of the preceding figures may be configured to operate in accordance with one or more of the examples set forth herein.

Any of the above described embodiments may be combined with any other embodiment (or combination of embodiments), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

It should be recognized that the systems described herein include descriptions of specific embodiments. These embodiments can be combined into single systems, partially combined into other systems, split into multiple systems or divided or combined in other ways. In addition, it is contemplated that parameters, attributes, aspects, etc. of one embodiment can be used in another embodiment. The parameters, attributes, aspects, etc. are merely described in one or more embodiments for clarity, and it is recognized that the parameters, attributes, aspects, etc. can be combined with or substituted for parameters, attributes, aspects, etc. of another embodiment unless specifically disclaimed herein.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the description is not to be limited to the details given herein, but may be modified within the scope and equivalents of the appended claims.

## Claims

1. A method for operation of a station in a wireless local area network, the method comprising:
receiving a reduced neighbor report (RNR) from an access point (AP), wherein the RNR includes one or more parameters related to security, verification status, or capabilities of neighbor APs;
parsing the RNR to determine the one or more parameters; and
scanning channels corresponding to one or more of the neighbor APs based on the one or more parameters related to the security, the verification status, or the capabilities of the neighbor APs in the RNR.

2. The method for operation of claim 1, wherein the one or more parameters includes a security mode parameter that indicates a security mode of the neighbor APs.

3. The method for operation of claim 1, wherein the one or more parameters includes a parameter that indicates that a same security mode is used for all APs in an Extended Service Set (ESS), or wherein the one or more parameters includes a parameter that indicates that a same security mode is used for all APs in a multi-link device (MLD).

4. The method for operation of claim 1, wherein the one or more parameters includes a parameter that indicates that whether a Wi-Fi Protected Access 2 (WPA2) only STA is operating on an Extended Service Set (ESS), or wherein the one or more parameters includes a parameter that indicates whether a basic service set (BSS) is verified.

5. The method for operation of claim 1, wherein the one or more parameters includes a parameter that indicates whether the neighbor APs are a moving AP or a static AP, or wherein the one or more parameters includes a parameter that indicates whether the neighbor APs support STA privacy enhancements.

6. The method for operation of claim 1, wherein the one or more parameters includes a parameter that indicates whether the neighbor APs are available for location or ranging measurements, or wherein the one or more parameters includes a parameter that indicates whether the neighbor APs support sensing.

7. The method for operation of claim 1, further comprising comparing the one or more parameters from the RNR to a set of preferences for the station, and selecting which of the neighbor APs to scan based on the set of preferences.

8. A method for operation of an access point (AP) in a wireless local area network, the method comprising:
collecting information regarding neighbor APs;
generating a reduced neighbor report (RNR), wherein the RNR includes one or more parameters related to security, verification status, or capabilities of the neighbor APs; and
sending the RNR to a station.

9. The method for operation of claim 8, wherein the one or more parameters includes a security mode parameter that indicates a security mode of the neighbor APs.

10. The method for operation of claim 8, wherein the one or more parameters includes a parameter that indicates that a same security mode is used for all APs in an Extended Service Set (ESS), or wherein the one or more parameters includes a parameter that indicates that a same security mode is used for all APs in a multi-link device (MLD).

11. The method for operation of claim 8, wherein the one or more parameters includes a parameter that indicates that whether a Wi-Fi Protected Access 2 (WPA2) only STA is operating on an Extended Service Set (ESS), or wherein the one or more parameters includes a parameter that indicates whether a basic service set (BSS) is verified.

12. The method for operation of claim 8, wherein the one or more parameters includes a parameter that indicates whether the neighbor APs are a moving AP or a static AP, or wherein the one or more parameters includes a parameter that indicates whether the neighbor APs support STA privacy enhancements, or wherein the one or more parameters includes a parameter that indicates whether the neighbor APs are available for location or ranging measurements, or wherein the one or more parameters includes a parameter that indicates whether the neighbor APs support sensing.

13. An apparatus comprising means to perform the method of any of claim 1 to claim 12.

14. A computer-readable media comprising instructions to cause an electronic device, upon execution of the instructions by one or more processors of the electronic device, to perform the method of any of claim 1 to claim 12.

15. An apparatus comprising logic, modules, or circuitry to perform the method of any of claim 1 to claim 12.
